# EUROPEAN PATENT SPECIFICATION

(11) **EP 3 123 082 B1**
(45) Date of publication and mention of the grant of the patent: **18.12.2019**
(21) Application number: 15706134.2
(22) Date of filing: 13.02.2015
(51) Int. Cl.: F25B 31/02, F04D 17/12, F04D 29/049, F04D 29/66, F25B 1/053, F16C 27/04, F04D 29/059

(54) **CHILLER COMPRESSOR ROLLING BEARINGS WITH SQUEEZE FILM DAMPERS**
KÜHLERVERDICHTER-WÄLZLAGER MIT QUETSCHFILMDÄMPFERN
ROULEMENTS DE COMPRESSEUR DE REFROIDISSEUR AVEC AMORTISSEURS À FILM FLUIDIQUE COMPRIMÉ

(30) Priority: 28.03.2014 US 201461971838 P
(43) Date of publication of application: 01.02.2017
(73) Proprietor: Carrier Corporation, Jupiter, FL 33478 (US)
(72) Inventor: SISHTLA, Vishnu M., Manlius, New York 13104 (US)
(74) Representative: Schmitt-Nilson Schraud Waibel Wohlfrom Patentanwälte Partnerschaft mbB
(86) International application number: PCT/US2015/015782
(87) International publication number: WO 2015/148004

(56) References cited:
- EP-A2- 2 607 633
- WO-A1-00/22359
- US-A- 4 772 135

## Description

### CROSS-REFERENCE TO RELATED APPLICATION

Benefit is claimed of the priority of US Patent Application Ser. No. 61971838, filed March 28, 2014, and entitled "Centrifugal Compressor Bearings".

### BACKGROUND

The disclosure relates to vapor compression systems. More particularly, the disclosure relates to centrifugal compressors in vapor compression systems.

One example of a vapor compression system involves a chiller. The exemplary chiller involves a two-stage centrifugal compressor driven by an electric motor. The main refrigerant flowpath through the exemplary system passes sequentially from an outlet of the compressor through a condenser, an economizer (e.g., a flash tank economizer), an expansion device, and a cooler, returning from the cooler to the compressor inlet. An economizer line may extend from the economizer to an interstage of the compressor.

Exemplary compressors include centrifugal compressors. Exemplary centrifugal compressors include two-stage centrifugal compressors. There are two forms of common two-stage centrifugal compressors. The so-called in-line form places two impellers one behind the other at a first end of the motor. In contrast, the so-called back-to-back form has a first impeller at a first end of the motor and a second impeller at a second end of the motor.

Typical compressor configurations support the motor shaft with a pair of bearings, one at each end of the motor. One or two impeller stages are mounted distally of the bearings. Thus, the in-line configuration has a longer shaft cantilever than does an equivalent back-to-back configuration. The asymmetry of the in-line configuration also imposes various mechanical loads on the compressor. As a result, in-line compressors are more susceptible to resonance problems than back-to-back compressors.

For a typical back-to-back compressor, operation is typically below the first critical speed. Inexpensive bearings can thus be used with an in-line compressor. For example, ceramic hybrid bearings may be used (i.e., bearings with metallic races and ceramic rolling elements). In contrast, the in-line configuration will have a lower first critical speed than a corresponding back-to-back configuration. The operational envelope of the in-line compressor may include this critical speed. Expensive magnetic bearings may be used to provide the required damping for an in-line compressor to withstand resonance associated with operation of the first critical speed. Thus, the cost of the magnetic bearings may be several thousand dollars higher than would ceramic hybrid bearings.

WO 00/22359 A1 shows that a refrigeration chiller employs a centrifugal compressor the impellers of which are mounted on a shaft which is itself mounted for rotation using rolling element bearings lubricated only by the refrigerant which constitutes the working fluid of the chiller system. An apparatus is taught for providing liquid refrigerant to the bearings immediately upon chiller start-up, during chiller operation and during a coastdown period subsequent to shutdown of the chiller and the drive motor of the chiller's compressor for motor cooling purposes. By use of a variable speed-driven motor to drive the compressor, optimized part load chiller performance is achieved in a chiller which does not require or employ an oil-based lubrification system.

### SUMMARY

A first aspect of the invention is a refrigeration system according to claim 1.

In one or more embodiments of any of the foregoing embodiments, the impeller is coaxial with the motor and mounted to a shaft of the rotor for said rotation about the impeller axis.

In one or more embodiments of any of the foregoing embodiments, the centrifugal compressor is an in-line compressor with a first said impeller and a second said impeller; and a first said bearing is between the motor and the first impeller and second impeller.

In one or more embodiments of any of the foregoing embodiments, each of the chambers is bounded by: a portion of the case; the outer race; and a pair of o-rings.

In one or more embodiments of any of the foregoing embodiments, at least one orifice is between the port and the chambers.

In one or more embodiments of any of the foregoing embodiments, each of the bearings further comprises an anti-rotation means coupling the outer race to the case.

In one or more embodiments of any of the foregoing embodiments, a drain port is coupled to the chambers.

As specified in claim 1, the refrigeration system of the invention comprises: a heat rejection heat exchanger coupled to the compressor to receive refrigerant from the discharge port; an expansion device; and a heat absorption heat exchanger coupled to the compressor to deliver refrigerant to the suction port.

As specified in claim 1, a bearing supply flowpath to said port bypasses the expansion device.

In one or more embodiments of any of the foregoing embodiments, the system has subcooling means for subcooling refrigerant flowing along the bearing supply flowpath.

In one or more embodiments of any of the foregoing embodiments, the subcooling means comprises a heat exchanger.

In one or more embodiments of any of the foregoing embodiments, the heat exchanger is a refrigerant-refrigerant heat exchanger having a first leg along the bearing supply flowpath and a second leg in heat exchange with the first leg.

In one or more embodiments of any of the foregoing embodiments, the second leg is along a branch flowpath branching off from and returning to a main flowpath and the subcooling means further comprises a second expansion device along the branch flowpath upstream of the second leg.

In one or more embodiments of any of the foregoing embodiments, a filter is between the subcooling means and the port.

In one or more embodiments of any of the foregoing embodiments, at least one orifice in the compressor restricts flow through the bearing supply flowpath.

In one or more embodiments of any of the foregoing embodiments, the system has a drain flowpath from the chambers.

In one or more embodiments of any of the foregoing embodiments, a pressure control valve is in the drain flowpath.

In one or more embodiments of any of the foregoing embodiments, the drain flowpath extends to the heat absorption heat exchanger to merge with a main flowpath.

A second aspect of the invention is a method for using a refrigeration system according to claim 14.

In one or more embodiments of any of the foregoing embodiments, the method further comprises subcooling the diverted refrigerant prior to delivery to the chambers.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a schematic view of a chiller system.
FIG. 2 is a partially schematic view of a compressor of the system of FIG. 1.

Like reference numbers and designations in the various drawings indicate like elements.

### DETAILED DESCRIPTION

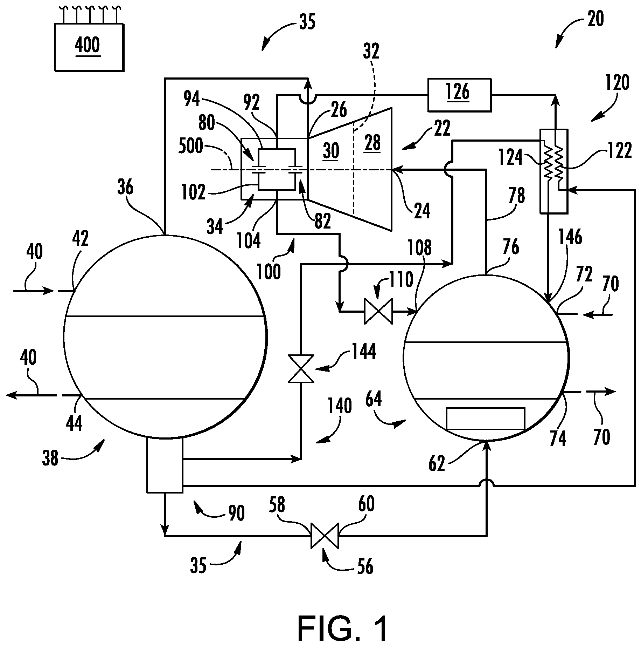

FIG. 1 shows a vapor compression system 20 having an improved compressor bearing configuration and operation. As is discussed further below, the compressor features a damped mechanical bearing configuration using relatively inexpensive mechanical bearings (e.g., ceramic hybrid bearings) in place of magnetic bearings. The exemplary vapor compression system 20 is a chiller used to cool a flow of water or other heat transfer liquid. The chiller comprises a compressor 22 having an inlet or suction port 24 defining suction conditions and an outlet or discharge port 26 defining discharge conditions. An exemplary compressor is a two-stage centrifugal compressor having a first stage shown as 28, a second stage shown as 30, and an interstage shown as 32. Each stage comprises a centrifugal impeller. The two impellers are co-driven by an electric motor 34 (e.g., directly or via a gearbox). As is discussed further below, the exemplary two-stage compressor is an in-line compressor directly driven by the motor.

The system 20 has a main refrigerant flowpath 35 proceeding through the stages of compression between the inlet 24 and the outlet 26 and proceeding downstream via a discharge line from the outlet 26 to the inlet 36 of a heat exchanger 38. In normal operation, the heat exchanger 38 is a heat rejection heat exchanger, more particularly a condenser rejecting heat from the refrigerant flowing therethrough to an external flow of a heat transfer fluid. An exemplary flow of heat transfer fluid is cooling water or air. An exemplary flow 40 of heat transfer fluid enters an inlet 42 of the condenser 38 and exits an outlet 44 (e.g., a water loop of the heat exchanger).

The main refrigerant flowpath 35 proceeds further downstream to an expansion device 56 having an inlet 58 and an outlet 60. The main refrigerant flowpath 35 passes further downstream from the expansion device outlet 60 to an inlet 62 of a second heat exchanger (a heat absorption heat exchanger (e.g., cooler)) 64. The cooler absorbs heat from a flow 70 of heat transfer fluid (e.g., water) entering an inlet 72 and exiting an outlet 74 (e.g., a water loop of the heat exchanger). The cooler has a refrigerant outlet 76 along the main refrigerant flowpath with a suction line 78 connecting the outlet 76 to the compressor inlet 24 to complete the main refrigerant flowpath 35.

As so far described, this is representative of one of several exemplary prior art configurations to which one or more of the further modifications may be applied. Alternative vapor compression systems may have other features, including basic variations such as economizers, suction line heat exchangers, hot gas bypass, multiple heat absorption heat exchangers, and the like and more extreme variations including multiple compressors, Heat rejection heat exchangers, and the like.

FIG. 1 further shows several additional flowpath branches which may be used to supply fluid to compressor bearings 80 and 82.The fluid fills chambers surrounding the bearings to act in a squeeze film damper role, damping radial excursions /vibration of the beaings. Such dampers are used in other arts such as turbine engines and turbochargers.

The bearings support a motor rotor and the impellers for rotation about a rotor axis 500. A supply flowpath 90 branches off from the main flowpath 35 upstream of the expansion device 56. In this example, the flowpath 90 is formed by appropriate conduits extending from an upstream end at a sump of the heat rejection heat exchanger 38. The flowpath 90 extends to a port 92 on the compressor (supply port). As is discussed further below, the flowpath continues through a manifold 94. The port 92 may be along a casting (or other structural component) of the housing or may be along piping/tubing secured thereto. Similarly, the manifold may include such piping or tubing.

FIG. 1 further shows a return flowpath 100 returning from the bearings to the main flowpath 35. The exemplary return flowpath 100 may contain one or more branches. In this example, a return manifold 102 is coupled to a return port 104 on the compressor. A line from the return port 104 extends back to return refrigerant to the main flowpath 35 (e.g., at a port 108 on the shell of the heat absorption heat exchanger 64). A pressure control device 110 (e.g., a spring- loaded pressure control valve (PCV) or an electronically controlled pressure control valve) is located along the flowpath 100 and maintains the bearings at a pressure difference above a pressure of the evaporator. The exemplary difference is 3 psi to 5 psi (21 kPa to 34 kPa), more broadly 2 psi to 10 psi (14 kPa to 69 kPa).

The refrigerant is delivered along the supply flowpath 90 as a liquid. Thus it is bypassed from upstream of the expansion device. However, it may be desirable to subcool this refrigerant. Subcooling and the pressure difference may serve to help avoid vaporization or cavitation of the liquid refrigerant. Cavitation would reduce damping and, thereby, allow severe shaft vibrations and associated damage.

An exemplary means for subcooling the refrigerant comprises a heat exchanger 120 for extracting heat from refrigerant passing along the supply flowpath 90. The exemplary heat exchanger 120 is a refrigerant-refrigerant heat exchanger having a first leg 122 along the supply flowpath 90 and a second leg 124 in heat exchange communication with the first leg 122 to absorb heat from the first leg. In order to provide cooled refrigerant to the second leg 124, a second bypass flowpath 140 is provided. The leg 124 is along the second bypass flowpath. The exemplary second bypass flowpath 140 extends from an upstream end along the main flowpath 35 upstream of the expansion device 56 (e.g., also from the sump of the heat rejection heat exchanger 38). The exemplary second bypass flowpath 140 further returns to the main refrigerant flowpath 35. The exemplary return of the second bypass flowpath 140 is at a port 146 on the vessel of the heat absorption heat exchanger 64. To cool refrigerant flowing along the second bypass flowpath 140, an exemplary expansion device 144 is along the second bypass flowpath 140. The exemplary expansion device 144 is an electronic expansion valve (EXV) or a thermal expansion valve (TXV) discussed further below. In operation, refrigerant leaving the expansion device 144 is at a temperature reduced below that entering the device. This reduced temperature refrigerant flows downstream and, in the second leg 124 of the heat exchanger 120 absorbs heat from refrigerant flowing through the first leg 122 so as to provide the subcooling noted above.

The expansion device 144 may be operated to provide a desired amount of subcooling to the refrigerant being delivered to the bearings. The exemplary control is based upon a sensor (e.g., a TXV bulb or by electronic temperature sensor used by a controller to control an EXV). An exemplary sensor is located downstream of the exit of the supply flowpath 90 from the heat exchanger 120. In this example, a filter 126 is located along the supply flowpath 90. In the particular example, the filter 126 is located between the heat exchanger 120 and the supply port 92. The exemplary heat exchanger 120 is a brazed plate heat exchanger or a shell and tube heat exchanger. The exemplary temperature sensor used to control the expansion device 144 may be located, for example, between the filter 126 and the heat exchanger 120.

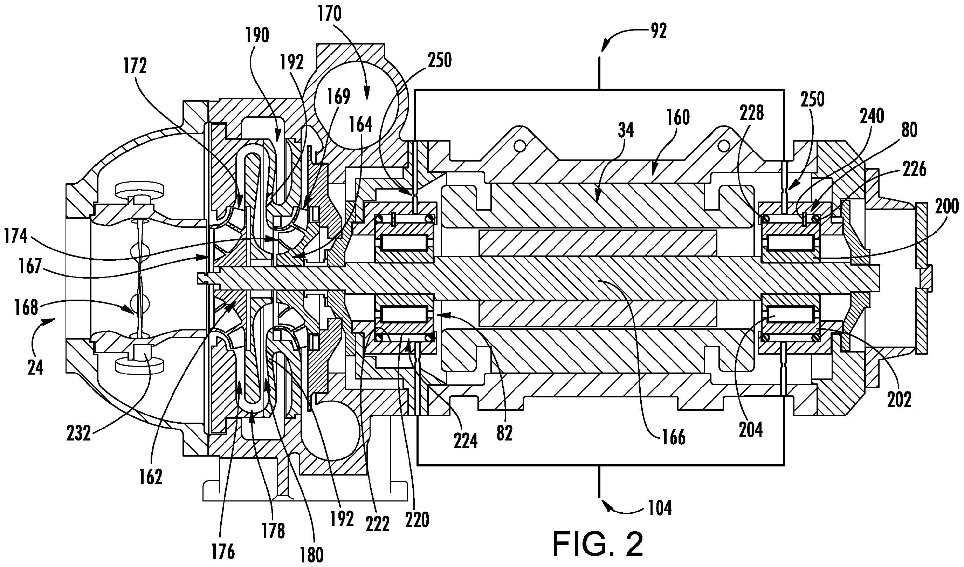

FIG. 2 partially schematically shows exemplary locations of the impeller stages. It further shows a case (housing) assembly 160 of the compressor containing the first stage impeller 162 and the second stage impeller 164 mounted to the shaft 166 of the motor 34. Between the inlet 24 and the inlet 167 of the first stage impeller, the case contains a controllable inlet guide vane (IGV) array 168. Downstream of the second stage impeller outlet 169, the case defines a discharge plenum 170 along which the discharge port (not shown) is located. Between the outlet 172 of the first stage impeller and the inlet 174 of the second stage impeller, components of the housing assembly define one or more passageways including diffuser passageways 176 extending radially outward to a turn 178 which turns back radially inward and joins with return passageways (return) 180 extending radially inward and then turning axially to meet the inlet 174.

FIG. 2 further shows each of the bearings 80, 82 as comprising an inner race 200, an outer race 202, and a circumferential array of rolling elements (e.g., rollers or balls) 204 in rolling engagement radially between the inner race and outer race. The inner race is secured to the motor shaft 166. The outer race is compliantly mounted relative to an adjacent portion of the case. The outer race has an outer diameter or OD surface 220 spaced apart from an adjacent inner diameter (ID) surface 222 of the case. A chamber 224 is formed between the outer race OD surface 220 and case ID surface 222. The exemplary chamber is axially bounded by seals such as o-rings 226, 228 compliantly engaging both the surfaces 220 and 222. The exemplary rolling elements 204 are ceramic. The bearings may be ceramic hybrid bearings wherein the races are steel. Chamber dimensions may be calculated based upon known engineering principles from the use of squeeze film dampers in other arts such as turbine engines and turbochargers. Exemplary chamber heights or radial spans are 0.25 mm to 1.25 mm, more narrowly 0.5 mm to 1.0 mm. Exemplary longitudinal spans (lengths) of the chambers are 10 mm to 40 mm, more narrowly 15 mm to 30 mm. Exemplary refrigerants are hydroflourocarbons (HFC), chloroflourocarbons (CFC), and hydrofluoro-olefins (HFO), and the refrigerant charge may comprise a by weight majority (or consist essentially of such as 90%+ or 95%+ by weight) of one or more such refrigerants with minor amounts of lubricant and/or other additives, if any.

FIG. 2 further shows exemplary means for preventing relative rotation of the outer race and case. The exemplary means comprises an anti-rotation pin 240 radially spanning the chamber. The exemplary pin 240 is secured to one of the outer race and case and radially floats in the other (e.g., accommodated in a bore in the other for radial movement but restraining all but slight axial movements, if any).

FIG. 2 further shows the supply flowpath 90 having a means for regulating supply flow. Exemplary means comprises one or more orifices 250. In the exemplary embodiment there are an exemplary two orifices 250 respectively located in branches of the manifold leading to the two chambers 224.

FIG. 1 further shows a controller 400. The controller may receive user inputs from an input device (e.g., switches, keyboard, or the like) and sensors (not shown, e.g., pressure sensors and temperature sensors at various system locations). The controller may be coupled to the sensors and controllable system components (e.g., valves, the bearings, the compressor motor, vane actuators, and the like) via control lines (e.g., hardwired or wireless communication paths). The controller may include one or more: processors; memory (e.g., for storing program information for execution by the processor to perform the operational methods and for storing data used or generated by the program(s)); and hardware interface devices (e.g., ports) for interfacing with input/output devices and controllable system components. As is discussed above, in a first exemplary embodiment the control is fully conventional in control of any baseline system it replaces.

As noted above, some systems may involve active control with additional routines which may be programmed or otherwise configured into the controller. Such systems may include the pressure regulating valve 110 being controlled by the controller to provide a desired fixed pressure or a pressure otherwise programmed or calculated by the controller. The expansion device 144 is an electronic expansion valve (EXV) similarly controlled by the controller to provide a fixed temperature of refrigerant delivered to the bearings or based upon programmed and/or calculated parameters. The control routine may provide cooling sufficient to avoid cavitation while providing means to optimize efficiency and optionally controlling damping levels and may be superimposed upon the controller's normal programming/routines (not shown, e.g., providing the basic operation of a baseline system to which the foregoing control routine is added).

The use of "first", "second", and the like in the description and following claims is for differentiation within the claim only and does not necessarily indicate relative or absolute importance or temporal order.

Where a measure is given in English units followed by a parenthetical containing SI or other units, the parenthetical's units are a conversion and should not imply a degree of precision not found in the English units.

One or more embodiments have been described. Nevertheless, it will be understood that various modifications may be made. For example, when applied to an existing basic system, details of such configuration or its associated use may influence details of particular implementations. Accordingly, other embodiments are within the scope of the the invention which is defined solely by the following claims.

## Claims

1. A refrigeration system (20) comprising:
a centrifugal compressor (22) comprising:
a case (160) having a suction port (24) and a discharge port (26);
an impeller (162, 164) mounted for rotation about an impeller axis (500) by a plurality of bearings (80, 82), the bearings each comprising:
an inner race (200);
an outer race (202); and
rolling elements (204) between the inner race and outer race;
the centrifugal compressor further comprising:
a motor (34) coupled to the impeller to drive rotation of the impeller about the impeller axis;
the refrigeration system further comprising:
a heat rejection heat exchanger (38) coupled to the compressor to receive refrigerant from the discharge port;
an expansion device (56);
a heat absorption heat exchanger (64) coupled to the compressor to deliver refrigerant to the suction port;
**characterized in that**
the outer race of each bearing is mounted for radial displacement relative to the case and is surrounded by an associated chamber (224);
the chambers are coupled to a port (92) on the compressor (22); and
the refrigeration system (20) further comprises a bearing supply flowpath (90) to said port (92) bypassing the expansion device (56).

2. The refrigeration system of claim 1 wherein:
the impeller (162,164) is coaxial with the motor (34) and mounted to a shaft (166) of the motor (34) for said rotation about the impeller axis (500).

3. The refrigeration system of claim 1 wherein:
the centrifugal compressor is an in-line compressor with a first said impeller (162) and a second said impeller (164); and
a first said bearing is between the motor and the first and second impellers (162, 164).

4. The refrigeration system of claim 1 wherein:
each of the chambers is bounded by:
a portion of the case;
the outer race; and
a pair of o-rings (226),

5. The refrigeration system of claim 1 further corn-prising:
at least one orifice (250) between the port and the chambers; and/or
a drain port (104) coupled to the chambers.

6. The refrigeration system of claim 1 wherein each of the bearings further comprises:
an anti-rotation means (240) coupling the outer race to the case.

7. The refrigeration system of claim 1 further comprising:
subcooling means (120, 144) for subcooling refrigerant flowing along the bearing supply flowpath;
wherein the subcooling means preferably comprises a heat exchanger (120).

8. The refrigeration system of claim 7 wherein:
the heat exchanger (120) is a refrigerant-refrigerant heat exchanger having a first leg (122) along the bearing supply flowpath and a second leg (124) in heat exchange with the first leg.

9. The refrigeration system of claim 7 wherein:
the second leg is along a branch flowpath (140) branching off from and returning to a main flowpath (35);
the subcooling means further comprises a second expansion device (144) along the branch flowpath (140) upstream of the second leg.

10. The refrigeration system of claim 7 further comprising a filter (126) between the subcooling means and the port.

11. The refrigeration system of claim 7 wherein:
at least one orifice (250) in the compressor restricts flow through the bearing supply flowpath.

12. The system of claim 7 further comprising:
a drain flowpath (100) from the chambers; and, preferably,
a pressure control valve (110) in the drain flowpath.

13. The refrigeration system of claim 12 wherein:
the drain flowpath extends to the heat absorption heat exchanger to merge with a main flowpath (35).

14. A method for using a refrigeration system comprising a centrifugal compressor (22) comprising:
a case (160) having a suction port (24) and a discharge port (26);
an impeller (162, 164) mounted for rotation about an impeller axis (500) by a plurality of bearings (80, 82), the bearings each comprising:
an inner race (200);
an outer race (202); and
rolling elements (204) between the inner race and outer race; and
a motor (34) coupled to the impeller to drive rotation of the impeller about the impeller axis,
wherein:
the outer race of each bearing is mounted for radial displacement relative to the case and is surrounded by an associated chamber (224); and
the chambers are coupled to a port (92) on the compressor; the refrigeration system further comprising:
a heat rejection heat exchanger (38) coupled to the compressor to receive refrigerant from the discharge port;
an expansion device (56);
a heat absorption heat exchanger (64) coupled to the compressor to deliver refrigerant to the suction port,
the method comprising:
running the compressor to drive refrigerant along a main flowpath proceeding sequentially from the compressor to the heat rejection heat exchanger, the expansion device, and the heat absorption heat exchanger to return to the compressor; and
diverting refrigerant from the main flowpath to the chambers.

15. The method of claim 14 further comprising:
subcooling the diverted refrigerant prior to delivery to the chambers.

## Patentansprüche

1. Kühlsystem (20), umfassend:
einen Zentrifugalverdichter (22), umfassend:
ein Gehäuse (160) mit einer Ansaugöffnung (24) und einer Auslassöffnung (26);
ein Flügelrad (162, 164), das zur Drehung um eine Flügelradachse (500) durch eine Vielzahl von Lagern (80, 82) montiert ist; wobei jedes Lager Folgendes umfasst:
einen Innenring (200);
einen Außenring (202); und
Wälzelemente (204) zwischen dem Innenring und dem Außenring;
wobei der Zentrifugalverdichter ferner Folgendes umfasst:
einen Motor (34), der an das Flügelrad gekoppelt ist, um die Drehung des Flügelrads um die Flügelradachse anzutreiben;
wobei das Kühlsystem, ferner Folgendes umfasst:
einen Wärmeabgabe-Wärmetauscher (38), der an den Verdichter gekoppelt ist, um Kühlmittel von der Auslassöffnung aufzunehmen;
eine Expansionsvorrichtung (56);
einen Wärmeabsorptions-Wärmetauscher (64), der an den Verdichter gekoppelt ist, um der Ansaugöffnung Kühlmittel zuzuführen;
**dadurch gekennzeichnet, dass**
der Außenring jedes Lagers zur radialen Verschiebung relativ zum Gehäuse montiert ist und von einer zugehörigen Kammer (224) umgeben ist;
die Kammern an einen Anschluss (92) des Verdichters (22) gekoppelt sind; und
das Kühlsystem (20) ferner einen Lagerzuführungsströmungsweg (90) zu dem Anschluss (92) umfasst, der die Expansionsvorrichtung (56) umgeht.

2. Kühlsystem nach Anspruch 1, wobei:
das Flügelrad (162, 164) mit dem Motor (34) koaxial ist und an einer Welle (166) des Motors (34) zur Drehung um die Flügelradachse (500) montiert ist.

3. Kühlsystem nach Anspruch 1, wobei
der Zentrifugalverdichter ein Inline-Verdichter mit einem ersten Flügelrad (162) und einem zweiten Flügelrad (164) ist; und
das erste Lager sich zwischen dem Motor und dem ersten und zweiten Flügelrad (162, 164) befindet.

4. Kühlsystem nach Anspruch 1, wobei
jede der Kammern begrenzt ist durch:
einen Gehäuseabschnitt;
den Außenring; und
ein Paar O-Ringe (226).

5. Kühlsystem nach Anspruch 1, ferner umfassend:
mindestens ein Loch (250) zwischen dem Anschluss und den Kammern; und/oder eine Abflussöffnung (104), die an die Kammern gekoppelt ist.

6. Kühlsystem nach Anspruch 1, wobei jedes der Lager ferner Folgendes umfasst:
ein Antidrehmittel (240), das den Außenring an das Gehäuse koppelt.

7. Kühlsystem nach Anspruch 1, ferner umfassend:
Unterkühlungsmittel (120, 144) zum Unterkühlen von Kühlmittel, das den Lagerzuführungsströmungsweg entlang fließt;
wobei das Unterkühlungsmittel vorzugsweise einen Wärmetauscher (120) umfasst.

8. Kühlsystem nach Anspruch 7, wobei:
der Wärmetauscher (120) ein Kühlmittel-Kühlmittel-Wärmetauscher ist, der einen ersten Schenkel (122) entlang des Lagerzuführungsströmungswegs und einen zweiten Schenkel (124) im Wärmeaustausch mit dem ersten Schenkel aufweist.

9. Kühlsystem nach Anspruch 7, wobei:
der zweite Schenkel entlang eines Zweigströmungswegs (140) verläuft, der von einem Hauptströmungsweg (35) abzweigt und zu diesem zurückkehrt;
das Unterkühlungsmittel ferner eine zweite Expansionsvorrichtung (144) entlang des Zweigströmungswegs (140) stromaufwärts des zweiten Schenkels umfasst.

10. Kühlsystem nach Anspruch 7, ferner umfassend einen Filter (126) zwischen dem Unterkühlungsmittel und der Öffnung.

11. Kühlsystem nach Anspruch 7, wobei:
mindestens eine Öffnung (250) im Verdichter eine Strömung durch den Lagerzuführungsströmungsweg behindert.

12. System nach Anspruch 7, ferner umfassend:
einen Abflussströmungsweg (100) von den Kammern; und vorzugsweise
ein Drucksteuerventil (110) in dem Abflussströmungsweg.

13. Kühlsystem nach Anspruch 12, wobei:
der Abflussströmungsweg sich zum Wärmeabsorption-Wärmetauscher erstreckt, um mit einem Hauptströmungsweg (35) zusammenzulaufen.

14. Verfahren zum Verwenden eines Kühlsystems, das einen Zentrifugalverdichter (22) umfasst, der Folgendes umfasst:
ein Gehäuse (160) mit einer Ansaugöffnung (24) und einer Auslassöffnung (26);
ein Flügelrad (162, 164), das zur Drehung um eine Flügelradachse (500) durch eine Vielzahl von Lagern (80, 82) montiert ist; wobei jedes Lager Folgendes umfasst:
einen Innenring (200);
einen Außenring (202); und
Wälzelemente (204) zwischen dem Innenring und dem Außenring; und
einen Motor (34), der an das Flügelrad gekoppelt ist, um die Drehung des Flügelrads um die Flügelradachse anzutreiben;
wobei:
der Außenring jedes Lagers zur radialen Verschiebung relativ zum Gehäuse montiert ist und von einer zugehörigen Kammer (224) umgeben ist; und
die Kammern an einen Anschluss (92) an dem Verdichter gekoppelt sind;
wobei das Kühlsystem ferner Folgendes umfasst:
einen Wärmeabgabe-Wärmetauscher (38), der an den Verdichter gekoppelt ist, um Kühlmittel von der Auslassöffnung aufzunehmen;
eine Expansionsvorrichtung (56);
einen Wärmeabsorptions-Wärmetauscher (64), der an den Verdichter gekoppelt ist, um der Ansaugöffnung Kühlmittel zuzuführen;
wobei das Verfahren Folgendes umfasst:
Betreiben des Verdichters, um Kühlmittel einen Hauptströmungspfad entlang zu treiben, sequentiell verlaufend von dem Verdichter zum Wärmerückstrahlung-Wärmetauscher, der Expansionsvorrichtung und dem Wärmeabsorption-Wärmetauscher, um zum Verdichter zurückzukehren; und
Umleiten von Kühlmittel vom Hauptströmungsweg zu den Kammern.

15. Verfahren nach Anspruch 14, ferner umfassend:
Unterkühlen des umgeleiteten Kühlmittels vor Zuführung zu den Kammern.

## Revendications

1. Système de réfrigération (20) comprenant :
un compresseur centrifuge (22) comprenant :
un boîtier (160) ayant un orifice d'aspiration (24) et un orifice de décharge (26) ;
une roue à aubes (162, 164) montée en rotation autour d'un axe de roue à aubes (500) par une pluralité de paliers (80, 82), les paliers comprenant chacun :
un chemin de roulement intérieur (200) ;
un chemin de roulement extérieur (202) ; et
des éléments de roulement (204) entre le chemin de roulement intérieur et le chemin de roulement extérieur ;
le compresseur centrifuge comprenant en outre :
un moteur (34) couplé à la roue à aubes pour entraîner la rotation de la roue à aubes autour de l'axe de roue à aubes ;
le système de réfrigération comprenant en outre :
un échangeur de chaleur à rejet de chaleur (38) couplé au compresseur pour recevoir un réfrigérant de l'orifice de décharge ;
un dispositif d'expansion (56) ;
un échangeur de chaleur à absorption de chaleur (64) couplé au compresseur pour distribuer un réfrigérant à l'orifice d'aspiration ;
**caractérisé en ce que**
le chemin de roulement extérieur de chaque palier est monté pour le déplacement radial par rapport au boîtier et est entouré par une chambre associée (224) ;
les chambres sont couplées à un orifice (92) sur le compresseur (22) ; et
le système de réfrigération (20) comprend en outre un trajet d'écoulement d'alimentation de palier (90) vers ledit orifice (92) contournant le dispositif d'expansion (56).

2. Système de réfrigération selon la revendication 1 dans lequel :
la roue à aubes (162, 164) est coaxiale avec le moteur (34) et montée sur un arbre (166) du moteur (34) pour ladite rotation autour de l'axe de roue d'aubes (500).

3. Système de réfrigération selon la revendication 1 dans lequel :
le compresseur centrifuge est un compresseur en ligne avec une première dite roue à aubes (162) et une deuxième dite roue à aubes (164) ; et
un premier dit palier est entre le moteur et les première et deuxième roues à aubes (162, 164).

4. Système de réfrigération selon la revendication 1 dans lequel :
chacune des chambres est délimitée par :
une portion du boîtier ;
le chemin de roulement extérieur ; et
une paire de joints toriques (226).

5. Système de réfrigération selon la revendication 1 comprenant en outre :
au moins un trou (250) entre l'orifice et les chambres ; et/ou
un orifice de drainage (104) couplé aux chambres.

6. Système de réfrigération selon la revendication 1 dans lequel chacun des paliers comprend en outre :
un moyen anti-rotation (240) couplant le chemin de roulement extérieur au boîtier.

7. Système de réfrigération selon la revendication 1 comprenant en outre :
des moyens de sous-refroidissement (120, 144) pour sous-refroidir un réfrigérant s'écoulant le long du trajet d'écoulement d'alimentation de palier ;
dans lequel le moyen de sous-refroidissement comprend de préférence un échangeur de chaleur (120).

8. Système de réfrigération selon la revendication 7 dans lequel :
l'échangeur de chaleur (120) est un échangeur de chaleur réfrigérant-réfrigérant ayant une première branche (122) le long du trajet d'écoulement d'alimentation de palier et une deuxième branche (124) dans l'échangeur de chaleur avec la première branche.

9. Système de réfrigération selon la revendication 7 dans lequel :
la deuxième branche est le long d'un trajet d'écoulement ramifié (140) se ramifiant à partir de et retournant à un trajet d'écoulement principal (35) ;
le moyen de sous-refroidissement comprend en outre un deuxième dispositif d'expansion (144) le long du trajet d'écoulement ramifié (140) en amont de la deuxième branche.

10. Système de réfrigération selon la revendication 7 comprenant en outre un filtre (126) entre le moyen de sous-refroidissement et l'orifice.

11. Système de réfrigération selon la revendication 7 dans lequel :
au moins un trou (250) dans le compresseur restreint l'écoulement à travers le chemin d'écoulement d'alimentation de palier.

12. Système selon la revendication 7 comprenant en outre :
un chemin d'écoulement de drainage (100) à partir des chambres ; et, de préférence,
une soupape de commande de pression (110) dans le chemin d'écoulement de drainage.

13. Système de réfrigération selon la revendication 12 dans lequel :
le chemin d'écoulement de drainage s'étend vers l'échangeur de chaleur à absorption de chaleur pour fusionner avec un trajet d'écoulement principal (35).

14. Procédé d'utilisation d'un système de réfrigération comprenant un compresseur centrifuge (22) comprenant :
un boîtier (160) ayant un orifice d'aspiration (24) et un orifice de décharge (26) ;
une roue à aubes (162, 164) montée en rotation autour d'un axe de roue à aubes (500) par une pluralité de paliers (80, 82), les paliers comprenant chacun :
un chemin de roulement intérieur (200) ;
un chemin de roulement extérieur (202) ; et
des éléments de roulement (204) entre le chemin de roulement intérieur et le chemin de roulement extérieur ; et
un moteur (34) couplé à la roue à aubes pour entraîner la rotation de la roue à aubes autour de l'axe de roue à aubes,
dans lequel :
le chemin de roulement extérieur de chaque palier est monté pour le déplacement radial par rapport au boîtier et est entouré par une chambre associée (224) ; et
les chambres sont couplées à un orifice (92) sur le compresseur ;
le système de réfrigération comprenant en outre :
un échangeur de chaleur à rejet de chaleur (38) couplé au compresseur pour recevoir un réfrigérant de l'orifice de décharge ;
un dispositif d'expansion (56) ;
un échangeur de chaleur à absorption de chaleur (64) couplé au compresseur pour distribuer un réfrigérant à l'orifice d'aspiration,
le procédé comprenant :
le fonctionnement du compresseur pour entraîner un réfrigérant le long d'un trajet d'écoulement principal allant séquentiellement du compresseur à l'échangeur de chaleur à rejet de chaleur, au dispositif d'expansion, et à l'échangeur de chaleur à absorption de chaleur pour retourner au compresseur ; et
la déviation du réfrigérant du trajet d'écoulement principal aux chambres.

15. Procédé selon la revendication 14 comprenant en outre :
le sous-refroidissement du réfrigérant dévié avant la distribution aux chambres.
